# FASCICULE DE BREVET EUROPEEN

(11) **EP 4 452 679 B1**
(45) Date de publication et mention de la délivrance du brevet: **04.02.2026**
(21) Numéro de dépôt: 22835687.9
(22) Date de dépôt: 12.12.2022
(51) Int. Cl.: B60J 5/04, B60J 1/10, B60R 1/06

(54) **MODULE DE VITRE FIXE POUR UN VÉHICULE AUTOMOBILE**
FESTSTEHENDES FENSTERMODUL FÜR EIN KRAFTFAHRZEUG
FIXED WINDOW MODULE FOR A MOTOR VEHICLE

(30) Priorité: 20.12.2021 FR 2113969
(43) Date de publication de la demande: 30.10.2024
(73) Titulaire: Renault s.a.s, 92100 Boulogne Billancourt (FR)
(72) Inventeur: AHDADA, Khalid, 78280 GUYANCOURT (FR); BERNARD, Noel, 78280 GUYANCOURT (FR); WATHY, Philippe, 78280 GUYANCOURT (FR)
(86) Numéro de dépôt international: PCT/EP2022/085389
(87) Numéro de publication internationale: WO 2023/117538

(56) Documents cités:
- JP-A- 2007 331 460
- JP-A- 2015 016 753
- JP-A- H05 229 386
- US-A1- 2010 064 592

## Description

### Domaine Technique de l'invention

L'invention concerne un module de vitre fixe pour un véhicule automobile, notamment un module de vitre fixe destiné à être installé dans un coin de porte avant d'un véhicule et supportant un rétroviseur extérieur du véhicule. L'invention porte aussi sur un procédé de fabrication d'un tel module de vitre fixe. L'invention porte encore sur une porte avant pour véhicule automobile comprenant un tel module de vitre fixe.

### Etat de la technique antérieure

Dans un véhicule automobile, la zone avant d'une porte latérale avant accueille généralement une vitre fixe, c'est-à-dire une vitre qui ne peut pas être baissée. Cette zone accueille également un rétroviseur extérieur et un lécheur de porte. Le lécheur de porte s'étend longitudinalement en surface extérieure de la porte latérale, entre d'une part la vitre fixe et une embase de rétroviseur, et d'autre part un panneau de porte avant. Cette zone de la porte avant, couramment dénommée "module de vitre fixe", est un nœud technique où il est difficile d'assurer une belle finition et une bonne étanchéité des pièces qui viennent s'y imbriquer.

Outre les composants mentionnés ci-dessus, les modules de vitre fixe connus de l'état de la technique comprennent une multitude de pièces telles que des mousses, et/ou des joints de vitre, et/ou des lèvres d'étanchéité. Ces pièces sont complexes à assembler lors de la fabrication du module de vitre fixe. Des défauts de positionnement de ces différentes pièces peuvent conduire à des défauts d'apparence du véhicule et/ou à une mauvaise étanchéité de la porte à laquelle le module de vitre fixe est intégré. Notamment, des flux d'air ascendants et/ou orientés de l'avant vers l'arrière du véhicule peuvent traverser le module de vitre fixe et ainsi parvenir dans l'habitacle, ce qui engendre du bruit et de l'inconfort.

Le document US 2010/064592 A1 divulgue un module de vitre similaire au préambule de la revendication 1.

### Présentation de l'invention

Le but de l'invention est de proposer un module de vitre fixe remédiant aux inconvénients ci-dessus et améliorant les modules de vitre fixe connus de l'art antérieur.

Plus précisément, un objet de l'invention est un module de vitre fixe simple à fabriquer, offrant un haut niveau d'étanchéité et une finition soignée.

### Résumé de l'invention

L'invention se rapporte à un module de vitre fixe pour un véhicule automobile, comprenant un premier sous-ensemble et un deuxième sous-ensemble fixé au premier sous-ensemble,
le premier sous-ensemble comprenant :
   - une vitre fixe,
   - une première portion d'un lécheur de porte, et
   - une première surface d'emboîtement,
le deuxième sous-ensemble comprenant :
   - une embase de rétroviseur extérieur,
   - une deuxième portion du lécheur de porte, et
   - une deuxième surface d'emboîtement,
une surface extérieure de ladite deuxième portion étant adjacente à une surface extérieure de ladite première portion, la deuxième surface d'emboîtement coopérant avec la première surface d'emboîtement pour définir la position du deuxième sous-ensemble relativement au premier sous-ensemble.

La deuxième surface d'emboîtement peut être agencée sur une surface intérieure de la deuxième portion du lécheur de porte, la surface intérieure de la deuxième portion étant agencée à l'envers de la surface extérieure de la deuxième portion, la première surface d'emboîtement s'étendant sous la surface extérieure de la deuxième portion du lécheur de porte.

La première surface d'emboîtement peut comprendre une gorge longitudinale, et la deuxième surface d'emboîtement peut comprendre une nervure longitudinale coopérant avec ladite gorge longitudinale.

Le premier sous-ensemble peut comprendre au moins une lèvre d'étanchéité s'étendant sans interruption sous la première portion du lécheur de porte et sous la deuxième portion du lécheur de porte.

Le premier sous-ensemble peut comprendre:
- une interface de fixation s'étendant sensiblement dans un plan parallèle à la vitre, et l'embase de rétroviseur extérieur peut être fixée à l'interface de fixation, et/ou
- un cadre s'étendant autour de la vitre, et/ou
- des moyens de fixation à un élément de véhicule, notamment à une porte de véhicule.

Le premier sous-ensemble peut être obtenu par surmoulage plastique de la vitre. Le deuxième sous-ensemble peut être obtenu par moulage plastique.

L'invention se rapporte également à un procédé de fabrication d'un module de vitre fixe tel que défini précédemment, le procédé de fabrication comprenant :
- une étape de fourniture du premier sous ensemble,
- une étape de fourniture du deuxième sous-ensemble,
- une étape d'assemblage du deuxième sous ensemble au premier sous-ensemble en emboîtant la deuxième surface d'emboîtement dans la première surface d'emboîtement.

L'étape d'assemblage peut comprendre :
- un déplacement en translation du deuxième sous-ensemble jusqu'à engager la deuxième surface d'emboîtement dans la première surface d'emboîtement, puis
- un déplacement en rotation du deuxième sous-ensemble pour plaquer le deuxième sous-ensemble contre le premier sous-ensemble, puis
- une fixation du deuxième sous-ensemble au premier sous-ensemble.

L'invention se rapporte également à une porte avant pour un véhicule automobile, la porte avant comprenant un module de vitre fixe tel que défini précédemment.

La porte avant peut comprendre une troisième portion du lécheur de porte, une surface extérieure de ladite troisième portion étant adjacente à la surface extérieure de ladite deuxième portion, la surface extérieure de ladite deuxième portion étant positionnée entre la surface extérieure de la première portion et la surface extérieure de la troisième portion, la troisième portion comprenant une extrémité s'étendant sous la deuxième portion.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue de côté d'une porte avant d'un véhicule automobile équipé d'un module de vitre fixe selon un mode de réalisation de l'invention.
La figure 2 est une vue partielle et en perspective de la porte avant du véhicule.
La figure 3 est une vue en perspective du module de vitre fixe.
La figure 4 est une première vue en perspective d'un premier sous-ensemble du module de vitre fixe.
La figure 5 est une deuxième vue en perspective du premier sous-ensemble du module de vitre fixe.
La figure 6 est une vue en perspective d'un deuxième sous-ensemble du module de vitre fixe.
La figure 7 est une vue de profil du deuxième sous-ensemble du module de vitre fixe.
La figure 8 est une vue partielle et en perspective de la porte avant du véhicule sans le deuxième sous-ensemble du module de vitre fixe.
La figure 9 est une vue en coupe du module de vitre fixe.
La figure 10 est une vue schématique illustrant une opération d'assemblage du deuxième sous-ensemble au premier sous-ensemble.

### Description détaillée

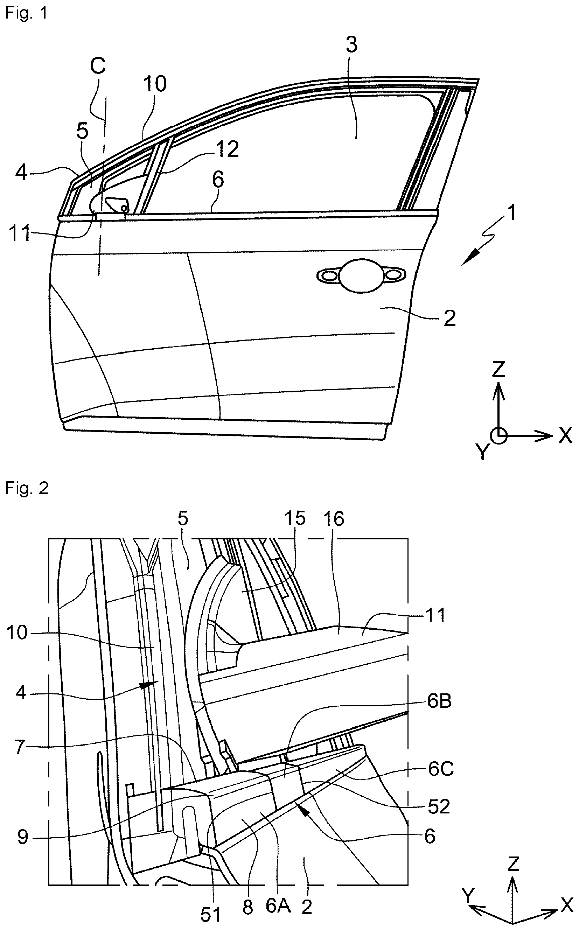

La figure 1 illustre schématiquement une porte 1 avant pour un véhicule automobile selon un mode de réalisation de l'invention. La porte 1 est une porte avant gauche, cependant l'invention peut également être déclinée pour une porte avant droite du véhicule. La porte 1 peut être articulée en rotation entre une position ouverte et une position fermée autour d'un axe vertical agencé à l'avant de la porte. La porte 1 comprend principalement un panneau de porte 2, une vitre principale 3 et un module de vitre fixe 4 selon un mode de réalisation de l'invention.

En remarque, sur les figures et dans la description, l'axe X désigne l'axe longitudinal du véhicule. En marche avant et en ligne droite, le véhicule progresse de l'arrière vers l'avant selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Y est orienté de la gauche vers la droite, la gauche et la droite étant définies selon le point de vue d'un conducteur du véhicule. L'axe Z désigne l'axe perpendiculaire à l'axe X et à l'axe Y. On considère que le véhicule repose sur un sol horizontal. L'axe Z est un axe vertical, orienté de bas en haut. Les axes X, Y et Z forment un repère orthogonal. Ce même repère, défini par référence à un véhicule, sera aussi utilisé pour décrire le module de vitre fixe, même considéré hors du véhicule, puisqu'il est destiné à un montage selon une orientation spécifique dans le véhicule.

Le panneau de porte 2 comprend une surface extérieure qui s'étend globalement dans un plan parallèle aux axes Y et Z, dans une moitié inférieure de la porte 1. Le panneau de porte 2 peut être fixé à une structure de porte et notamment accueillir une poignée de porte.

La vitre principale 3 s'étend globalement parallèlement au panneau de porte, au-dessus de celui-ci. La vitre principale 3 peut être entourée par un cadre formant une partie du contour de la porte 1, ce cadre étant fixé au panneau de porte 2 et/ou à la structure de porte. La vitre principale 3 peut être mobile en translation verticalement de manière à créer une ouverture entre l'extérieur du véhicule et l'habitacle.

Le module de vitre fixe 4 comprend une deuxième vitre 5, fixe par rapport à la porte 1. Contrairement à la vitre principale 3, la vitre 5 ne peut pas être abaissée de manière à créer une ouverture. Cette vitre est donc immobile par rapport à la porte 1. Le module de vitre fixe 4 est positionné à l'avant de la porte 1, notamment au niveau d'un coin supérieur avant de la porte 1. Ainsi, un tel module pourrait également être dénommé module de coin de porte. Le module de vitre fixe occupe ainsi une position proche d'une charnière de la porte 1. La vitre principale 3 et la vitre 5 fixe occupent une moitié supérieure de la porte 1. Ces deux vitres 3, 5 sont séparées du panneau de porte 2 par un lécheur de porte 6.

Le lécheur de porte 6, également dénommé lécheur de vitre puisqu'il vient aussi en contact avec les vitres 3 et 5, ou encore baguette de porte, est un élément s'étendant longitudinalement sur toute la longueur de la porte 1, c'est-à-dire entre son bord avant et son bord arrière. Le lécheur de porte 6 est un élément de finition important du véhicule. Il forme une délimitation nette entre les vitres 3 et 5 et le panneau de porte 2 tout en masquant une ligne de jonction entre le panneau de porte 2 et les vitres 3 et 5. Le lécheur de porte 6 comprend une surface extérieure profilée selon l'axe X, c'est-à-dire une surface extérieure régulière et de profil constant selon l'axe X. Par "surface extérieure", on comprend la surface du lécheur de porte 6 qui est visible depuis l'extérieur du véhicule.

Comme cela est bien visible sur la figure 2, la surface extérieure du lécheur de porte comprend une première face 7 sensiblement horizontale et une deuxième face 8 sensiblement verticale. Ces deux faces 7 et 8 sont reliées au niveau d'une arrête 9 qui peut être arrondie. La première face 7 s'étend contre les vitres 3 et 5 et perpendiculairement à celles-ci. La deuxième face 8 s'étend dans le prolongement du panneau de porte 2. En variante, le lécheur de porte 6 pourrait adopter une forme différente. Par exemple il pourrait ne s'étendre que sur une partie de la longueur de la porte et/ou comprendre un agencement différent de ses faces. Par exemple, le lécheur de porte pourrait ne comprendre qu'une seule face, éventuellement arrondie, rejoignant le panneau de porte 2 aux vitres 3 et 5.

Le module de vitre fixe 4 comprend aussi un cadre 10 s'étendant autour de la vitre 5 et un rétroviseur extérieur du véhicule, dont seule une embase 11 est illustrée sur les figures. Le cadre 10, ou dormant 10, entoure au moins partiellement la vitre 5 et permet de solidariser le module de vitre fixe 4 à la porte 1. En particulier, le cadre 10 comprend un montant 12 s'étendant sensiblement verticalement entre la vitre principale 3 et la vitre 5. Le module de vitre fixe 4 à une forme globalement trapézoïdale. Un premier côté de la forme trapézoïdale s'étend horizontalement en partie inférieure du module de vitre fixe 4 et est formé par une partie du lécheur de porte 6. Un deuxième côté de la forme trapézoïdale est formé par le montant 12. Un troisième côté s'étend en oblique vers le haut et vers l'arrière et forme également un bord supérieur de la porte 1, agencé dans le prolongement d'un bord supérieur de la vitre principale 3. Un quatrième côté s'étend sensiblement verticalement et forme également un bord avant de la porte 1. Le cadre 10 peut comprendre des moyens de fixation 13 à la porte 1. Ces moyens de fixation 13 peuvent être par exemple des agrafes ou des trous destinés à coopérer avec des vis de fixation. Ces moyens de fixation peuvent notamment être prévus aux extrémités inférieure et supérieure du montant 12. Le cadre 10 peut également comprendre des moyens d'étanchéité 14 configurés pour rendre étanche une interface entre le cadre 10 et d'autres éléments de la porte 1 et/ou une interface entre le cadre 10 et l'ouverture latérale du véhicule dans laquelle la porte 10 prend position lorsqu'elle est fermée.

Le rétroviseur extérieur comprend de manière classique un miroir permettant d'observer les autres véhicules situés à l'arrière du véhicule. L'embase 11 comprend un socle 15 s'étendant sensiblement parallèlement à la vitre 5 et un bras 16 s'étendant transversalement vers l'extérieur du véhicule. L'embase 11 est positionnée dans un coin arrière inférieur du module de vitre fixe 4 tandis que la vitre 5 s'étend en partie supérieur et à l'avant du module de vitre fixe 4. Une ligne de délimitation entre la vitre 5 et le socle 15 peut décrire au moins grossièrement un quart de cercle partant du milieu du premier côté et reliant le milieu du deuxième côté de la forme trapézoïdale. En variante, l'embase 11 pourrait être positionnée différemment relativement à la vitre 5. En particulier, l'embase 11 pourrait être positionnée à l'avant du module de vitre fixe tandis que la vitre 5 serait positionnée à l'arrière, la ligne de délimitation entre la vitre 5 et l'embase 11 s'étendant alors sensiblement verticalement. De préférence, la vitre 5 s'étend directement autour ou à côté du socle 15.

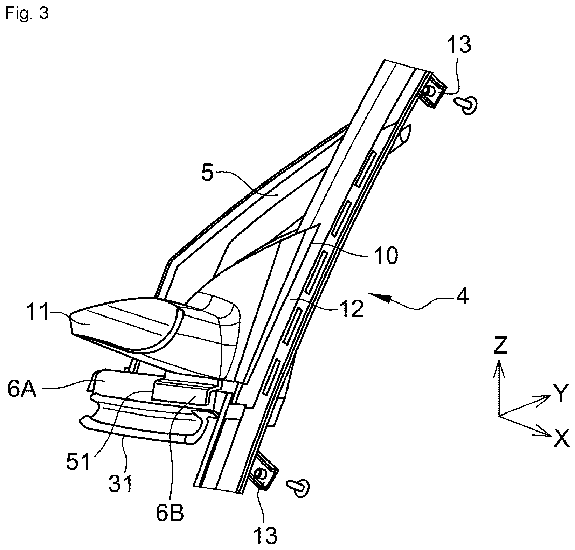

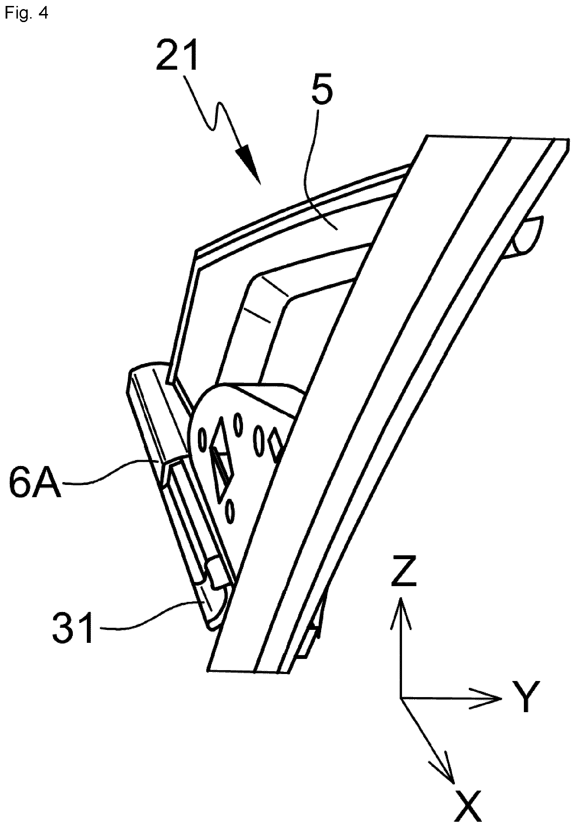

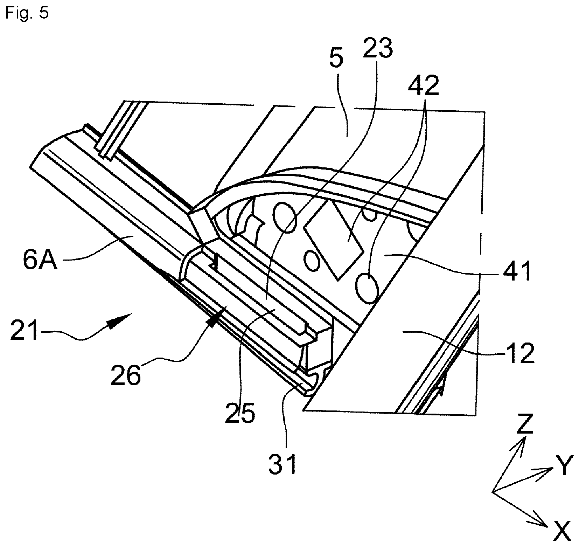

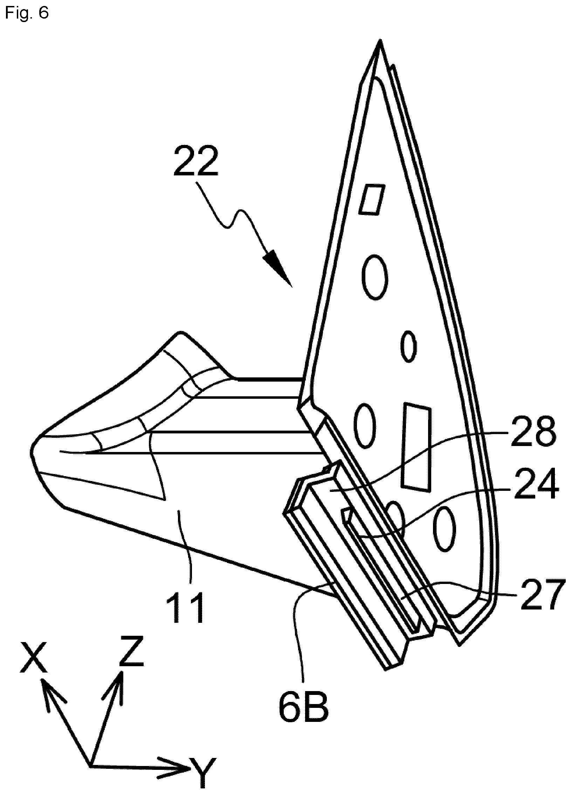

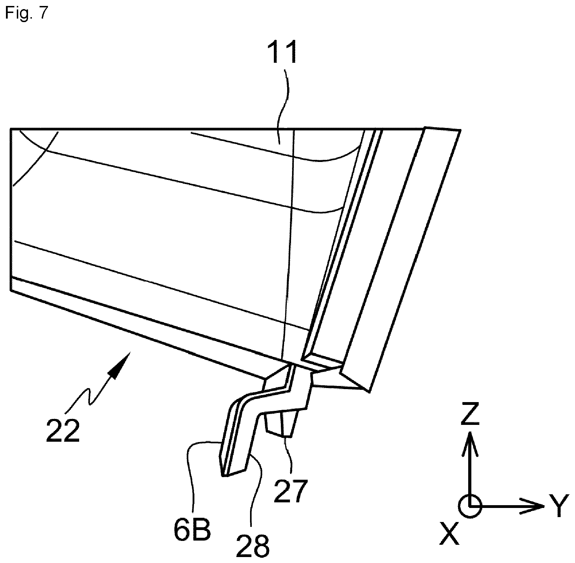

Le module de vitre fixe 4 est illustré plus en détail sur la figure 3. Il comprend deux sous-ensembles 21, 22 fixés l'un à l'autre. Un premier sous-ensemble 21 (illustré isolément sur les figures 4 et 5) comprend la vitre 5, une première portion 6A du lécheur de porte 6, le cadre 10, et une première surface d'emboîtement 23. Un deuxième sous-ensemble 22 (illustré isolément sur les figures 6 et 7) comprend l'embase 11 de rétroviseur extérieur, une deuxième portion 6B du lécheur de porte 6, et une deuxième surface d'emboîtement 24. Le premier sous-ensemble 21 est fixé directement à la porte 1, notamment via le cadre 10 et le deuxième sous-ensemble 22 est fixé indirectement à la porte 1, par l'intermédiaire du premier sous-ensemble 21.

La surface extérieure de la deuxième portion 6B est adjacente à la surface extérieure de la première portion 6A. Autrement dit, la surface extérieure de la deuxième portion 6B est accolée à la surface extérieure de la première portion 6A, et elle est agencée dans le prolongement de la surface extérieure de la première portion 6A. En particulier, la surface extérieure de la première portion 6A est positionnée à l'avant de la surface extérieure de la deuxième portion 6B. Une ligne de séparation S1 entre la surface extérieure de la première portion 6A et la surface extérieure de la deuxième portion 6B s'étend donc dans un plan parallèle à l'axe Y et à l'axe Z. On appelle J1 le jeu entre un bord arrière de la surface extérieure de la première portion 6A et un bord avant de la surface extérieure de la deuxième portion 6B. Avantageusement, le jeu J1 est nul ou très faible, de l'ordre de quelques dixièmes de millimètre, notamment inférieur ou égal à 1,5 mm, voire inférieur ou égal à 1mm. Selon une variante de réalisation la ligne de séparation S1 pourrait ne pas être verticale. Cette ligne de séparation pourrait par exemple être oblique, voire horizontale et/ou suivre un tracé non rectiligne constitué de plusieurs segments. Un segment de ce tracé pourrait s'étendre parallèlement à l'arrête 9.

La deuxième surface d'emboîtement 24 coopère avec la première surface d'emboîtement 23 pour définir la position du deuxième sous-ensemble 22 relativement au premier sous-ensemble 21. Les deux surfaces d'emboîtement permettent de définir une position stable et unique entre les deux sous-ensembles 21 et 22. Elles comprennent avantageusement des formes géométriques complémentaires ou autrement dit interdépendantes. En particulier, la première surface d'emboîtement 23 comprend une gorge longitudinale 25. La gorge longitudinale 25 s'étend parallèlement à l'axe X et comprend une ouverture orientée vers le haut. La deuxième surface d'emboîtement 24 comprend une nervure longitudinale 27 de forme complémentaire à la gorge longitudinale 25. La nervure longitudinale 27 est une surface en relief faisant saillie vers le bas. En particulier, la longueur de la nervure longitudinale 27 suivant l'axe X et la largeur de la nervure longitudinale 27 suivant l'axe Y sont sensiblement égales respectivement à la longueur de la gorge longitudinale 25 suivant l'axe X et la largeur de la gorge longitudinale 25 suivant l'axe Y. La nervure longitudinale 27 est configurée pour être engagée dans la gorge longitudinale 25 par un mouvement de translation sensiblement vertical vers le bas du deuxième sous-ensemble relativement au premier sous-ensemble. Ainsi, le deuxième sous-ensemble, peut reposer par gravité sur le premier sous-ensemble de manière stable ce qui facilite l'assemblage de ces deux sous-ensembles.

Avantageusement, les surfaces d'emboîtement 23 et 24 sont réalisées par moulage plastique, ce qui permet d'atteindre une grande précision dimensionnelle et donc un excellent positionnement du deuxième sous-ensemble 22 par rapport au premier sous-ensemble 21. En remarque, la nervure longitudinale 27 comprend de préférence une extrémité plus fine que sa base. Le profil de la nervure longitudinale est donc sensiblement triangulaire. De même la gorge longitudinale 25 comprend un profil évasé, complémentaire à celui de la nervure longitudinale 27. Ces formes permettent un démoulage aisé lors de la fabrication des surfaces d'emboîtement par injection plastique.

En variante, la première et la deuxième surface d'emboîtement pourraient être réalisées différemment. Par exemple, la nervure longitudinale pourrait être formée dans la première surface d'emboitement 23 et la gorge longitudinale pourrait alors être formée dans la deuxième surface d'emboîtement 24. Une telle configuration pourrait néanmoins contraindre la forme de la surface extérieure du lécheur de porte 6, notamment en rendant le lécheur de porte plus volumineux. Selon un autre exemple, les surfaces d'emboîtements pourraient être réalisées avec une pluralité de créneaux, et/ou de dents, et/ou de plots saillants. Plus généralement, toutes surfaces permettant un emboîtement du premier sous-ensemble avec le deuxième sous-ensemble pourraient être proposées. De plus, les surfaces d'emboîtement peuvent être prévues pour être engagées l'une dans l'autre selon un mouvement de translation relatif qui n'est pas nécessairement parallèle à l'axe Z. Notamment, les surfaces d'emboîtement pourraient être prévues pour être engagées l'une dans l'autre selon un mouvement de translation relatif parallèlement à l'axe X ou l'axe Y. Une fois les deux surfaces d'emboitement engagées l'une dans l'autre on obtient un encastrement du premier sous-ensemble avec le deuxième sous-ensemble : aucun déplacement en translation entre les deux sous-ensembles n'est possible autre que celui permettant de désassembler les deux sous-ensembles par un déplacement inverse au déplacement d'assemblage. Les deux portions 6A et 6B sont alors positionnées relativement l'une à l'autre suivant les axes X, Y et Z et leurs surfaces extérieures sont affleurantes.

La première surface d'emboîtement 23 s'étend en vis-à-vis de la surface extérieure de la deuxième portion 6B du lécheur de porte 6 suivant l'axe longitudinal X. Comme cela est visible notamment sur la figure 5, on comprend donc qu'une partie 26 de la première portion 6A porte la première surface d'emboîtement 23, et que cette partie 26 s'étend longitudinalement sous la surface extérieure de la deuxième portion 6B. La deuxième surface d'emboîtement 24 est positionnée sur une surface intérieure 28 de la deuxième portion 6B, ladite surface intérieure 28 étant agencée à l'envers de la surface extérieure de la deuxième portion 6B, c'est-à-dire au verso de la surface extérieure de la deuxième portion 6B, comme cela est visible sur les figures 6 et 7.

La deuxième portion 6B du lécheur de porte 6 peut s'étendre jusqu'à un bord arrière du module de vitre fixe 4, c'est-à-dire jusqu'au montant 12, ou au contraire, elle peut s'arrêter à l'avant du bord arrière du module de vitre fixe 4. En particulier, la deuxième portion 6B peut avoir une longueur selon l'axe X sensiblement égale à la longueur de l'embase 11 selon ce même axe. Le lécheur de porte 6 comprend une troisième portion 6C s'étendant à l'arrière de la deuxième portion 6B. De même qu'entre les portions 6A et 6B, la surface extérieure de la troisième portion 6C est adjacente à la surface extérieure de la deuxième portion 6B. Une ligne de séparation S2 entre la surface extérieure de la deuxième portion 6B et la surface extérieure de la troisième portion 6C s'étend dans un plan parallèle à l'axe Y et à l'axe Z. On appelle J2 le jeu entre un bord arrière de la surface extérieure de la deuxième portion 6B et un bord avant de la surface extérieure de la troisième portion 6C. Avantageusement, le jeu J2 est nul ou très faible, notamment inférieur ou égal à 1,5 mm, voire inférieur ou égal à 1 mm. Avantageusement les lignes de séparation S1 et S2 s'étendent verticalement respectivement sous une face avant et sous une face arrière du bras 16 de l'embase 11. Ces lignes de séparation sont ainsi masquées par l'embase 11 et se fondent avec les lignes du rétroviseur. Selon une variante de réalisation, la ligne de séparation S2 pourrait ne pas être verticale. Cette ligne de séparation pourrait par exemple être oblique, voire horizontale et/ou suivre un tracé non rectiligne constitué de plusieurs segments. Un segment de ce tracé pourrait s'étendre parallèlement à l'arrête 9. Lors de la fabrication de la porte 1, la troisième portion 6C du lécheur de porte peut être fixée après le montage du module de vitre fixe. Il est ainsi possible de plaquer le bord avant de la surface extérieure de la troisième portion 6C contre le bord arrière de la surface extérieure de la deuxième portion 6B, ce qui permet d'obtenir un jeu J2 nul.

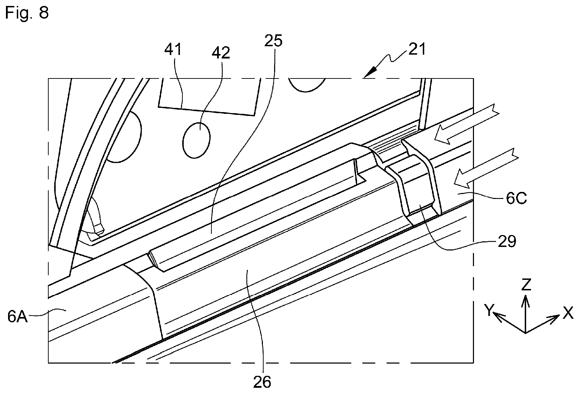

La troisième portion 6C comprend une extrémité 29 avant (bien visible sur la figure 8) s'étendant sous la deuxième portion 6B. Autrement dit, l'extrémité 29 avant est recouverte par une extrémité arrière de la deuxième portion. On forme ainsi une chicane qui empêche l'air de s'infiltrer dans le module de vitre fixe au niveau de la ligne de séparation S2 et l'étanchéité du module de vitre fixe est améliorée.

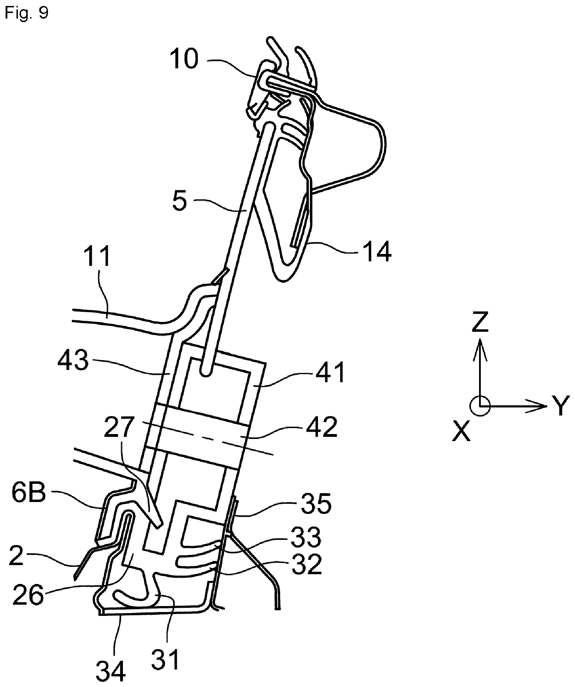

La figure 9 est une vue en coupe du module de vitre fixe 4 selon un plan de coupe vertical C identifié sur la figure 1. En référence à cette figure, le premier sous-ensemble 21 comprend également au moins une lèvre d'étanchéité 31 s'étendant sans interruption sous la première portion 6A et sous la deuxième portion 6B du lécheur de porte 6. En particulier, la lèvre d'étanchéité 31 s'étend de manière continue sous la ligne de séparation S1. Cette lèvre d'étanchéité 31 est aussi bien visible sur les figures 3, 4 et 5. Elle comprend une forme profilée, saillante globalement vers le bas. Elle s'étend longitudinalement le long du bord inférieur du module de vitre fixe 4 et vient en contact avec un bord horizontal 34 de la structure supportant le panneau de porte. Le premier sous-ensemble 21 peut également comprendre une deuxième lèvre d'étanchéité 32 et même une troisième lèvre d'étanchéité 33. Les lèvres d'étanchéité 32 et 33 sont globalement saillante vers l'intérieur du véhicule, parallèlement à l'axe Y, et viennent en contact avec un bord vertical 35 de la structure supportant le panneau de porte. Chacune des lèvres d'étanchéité 31, 32, 33 est configurée de sorte à empêcher l'air extérieur de parvenir dans l'habitacle en passant entre le lécheur de porte 6 et le panneau de porte 2. Les lèvres d'étanchéité 31, 32, 33 sont ininterrompues sur toute leur longueur. On obtient ainsi une excellente étanchéité à l'air et à l'eau à l'interface entre le module de vitre fixe 4 et le panneau de porte 2. Comme, le premier sous-ensemble 21 est fixe par rapport au panneau de porte, l'étanchéité formée par ces lèvres d'étanchéité est une étanchéité statique. Le bord horizontal 34 et le bord vertical 35 sont deux bords d'un puits de vitre, c'est-à-dire deux bords d'un logement longitudinal et profilé en forme de U de la structure de la porte 1 supportant le panneau de porte 2. Cette structure peut notamment être une structure métallique.

Selon une variante de réalisation de l'invention, le nombre et/ou l'agencement des lèvres d'étanchéité pourraient être différents. Notamment, le premier sous-ensemble pourrait ne comprendre qu'une ou deux lèvres d'étanchéité parmi les trois lèvres d'étanchéités 31, 32 et 33. Il pourrait également comprendre quatre ou même un plus grand nombre encore de lèvres d'étanchéité.

Par ailleurs, le premier sous-ensemble 21 comprend également une interface de fixation 41 à laquelle le socle 15 de l'embase 11 de rétroviseur extérieur est fixé. Cette interface de fixation 41 s'étend sensiblement dans un plan parallèle à la vitre 5, dans un coin arrière inférieur du premier sous-ensemble 21. L'interface de fixation 41 s'étend notamment directement au-dessus de la partie 26 de la première portion 6A dans laquelle est formée la première surface d'emboîtement 23. Enfin, l'interface de fixation 41 s'étend aussi contre le montant 12. Elle comprend des ouvertures 42 destinées à accueillir des moyens de fixation de l'embase 11, des moyens d'ajustement de la position de l'embase 11, et des fils électriques. L'interface de fixation 41 peut avoir un contour identique au contour du socle 15 de l'embase 11 de rétroviseur. La vitre 5 ne s'étend pas au niveau de l'interface de fixation 41. Les ouvertures 42 prévues dans l'interface de fixation 41 sont bouchées par le socle 15 qui les recouvre. Enfin, un élément absorbant 43, éventuellement sous la forme d'une plaque de mousse, peut être interposé entre le socle 15 et l'interface de fixation 41. Cet élément absorbant permet d'éviter d'éventuelles vibrations dans le rétroviseur extérieur. Cet élément absorbant peut également former une barrière acoustique aux éventuels flux d'air au niveau de l'embase 11 de rétroviseur extérieur. Cet élément absorbant peut également améliorer l'étanchéité à l'eau de l'interface de fixation 41, notamment au niveau des ouvertures 42.

Comme le deuxième sous-ensemble 22 bénéficie déjà d'une liaison mécanique avec le premier sous-ensemble 21 au niveau des surfaces d'emboîtement 23 et 24, la surface du socle 15 et de l'interface de fixation 41 peut être réduite, au profit de la surface de la vitre 5. L'invention permet donc de proposer des modules de vitre fixe avec une surface de vitre fixe augmentée, ce qui améliore la visibilité des utilisateurs du véhicule.

Avantageusement, le premier sous-ensemble 21 est fabriqué par surmoulage plastique de la vitre 5. Ce procédé permet d'obtenir un sous-ensemble d'un seul tenant avec une excellente étanchéité, notamment au niveau de l'interface entre la vitre 5 et la première portion 6A du lécheur de porte, ainsi qu'au niveau de l'interface entre la vitre 5 et le cadre 10. Le cadre 10 et les lèvres d'étanchéité 31, 32, 33 sont également formées au cours de ce procédé de surmoulage. Un procédé de moulage bi-matière peut éventuellement être mis en œuvre. On bénéficie donc d'une continuité de matière entre les lèvres d'étanchéité 31, 32, 33, la première portion 6A du lécheur de porte et le cadre 10, ce qui optimise encore l'étanchéité du module de vitre fixe 4. Enfin, ce procédé permet d'obtenir une grande précision géométrique du premier sous-ensemble 21. De même, le deuxième sous-ensemble 22 peut être intégralement fabriqué par moulage plastique. L'embase 11 et la deuxième portion 6B du lécheur de porte forme ainsi un ensemble monobloc. La fabrication du deuxième sous-ensemble 22 est donc très simple. Le deuxième sous-ensemble possède ainsi une grande précision géométrique. En particulier il possède un positionnement optimal et parfaitement reproductible de l'embase 11 relativement à la deuxième portion 6B du lécheur de porte.

Les portions 6A, 6B, et/ou 6C du lécheur de porte peuvent éventuellement être peintes ou revêtue d'une peau d'aspect. Le lécheur de porte 6 peut avoir par exemple un aspect noir mat, noir brillant ou chromé. La peau d'aspect peut être clipsée et/ou collé sur sa portion respective de lécheur de porte. Un enjoliveur, notamment en métal, peut également être utilisé en remplacement d'une peau d'aspect.

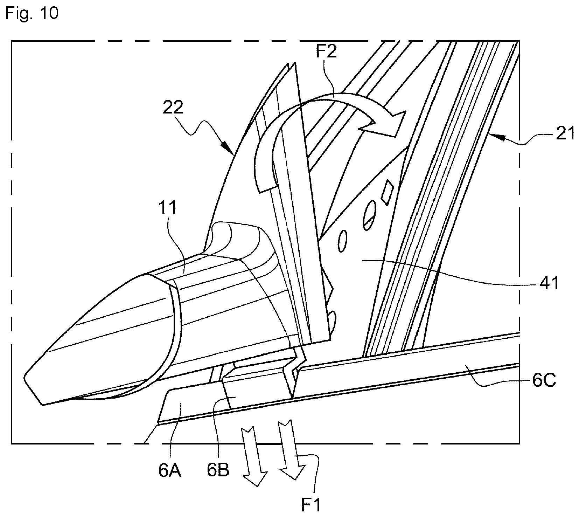

Pour fabriquer le module de vitre fixe 4, on peut procéder de la manière suivante. Tout d'abord, on fournit le premier sous ensemble 21 et le deuxième sous-ensemble 22. Ensuite, on assemble le deuxième sous ensemble au premier sous-ensemble en emboîtant la deuxième surface 24 d'emboîtement dans la première surface d'emboîtement 23. Pour cela on déplace en translation le deuxième sous-ensemble jusqu'à engager la deuxième surface d'emboîtement dans la première surface d'emboîtement. En particulier, comme cela est illustré par une première flèche F1 sur la figure 10, on déplace le deuxième sous-ensemble par translation vers le bas. Ensuite, on fait pivoter le deuxième sous-ensemble jusqu'à le plaquer contre le premier sous-ensemble. Ce mouvement de pivotement, illustré par une flèche F2, se fait sensiblement autour de l'axe défini par le lécheur de porte 6. Les deux surfaces d'emboîtement 23, 24 sont alors parfaitement emboîtées et les ouvertures 42 se positionnent naturellement en vis-à-vis de puits taraudés prévus dans le socle 15. Enfin, on achève la fixation du deuxième sous-ensemble au premier sous-ensemble, notamment au moyen de vis passant au travers des ouvertures 42 et coopérant avec les puits taraudés. D'autres moyens de fixation que des vis de fixation pourraient être envisagés.

Finalement, grâce à l'invention on obtient un module de vitre fixe 4 très simple à fabriquer. Les différentes portions 6A, 6B et 6C du lécheur de porte 6 sont bien alignées et affleurantes. Les lignes de séparation 51 et 52 entre les différentes portions demeures discrètes. Le module de vitre fixe offre donc une finition de haute qualité. Enfin, les lèvres d'étanchéité 31, 32 et 33 s'étendant de manière ininterrompue en partie inférieure du module de vitre fixe 4, on obtient une isolation efficace entre l'habitacle et l'extérieur du véhicule, au niveau du puits de vitre s'étendant sous la vitre 5. Il n'est pas utile d'ajouter un élément en mousse ou un quelconque élément d'étanchéité supplémentaire pour obtenir l'étanchéité requise.

## Revendications

1. Module de vitre fixe (4) pour un véhicule automobile, comprenant un premier sous-ensemble (21) et un deuxième sous-ensemble (22) fixé au premier sous-ensemble,
le premier sous-ensemble (21) comprenant :
- une vitre fixe (5),
- une première portion (6A) d'un lécheur de porte (6), et
- une première surface d'emboîtement (23),
le deuxième sous-ensemble (22) comprenant :
- une embase (11) de rétroviseur extérieur,
**caractérisé en ce que** le deuxième sous-ensemble comprend en outre :
- une deuxième portion (6B) du lécheur de porte (6), et
- une deuxième surface d'emboîtement (24),
et **en ce que** une surface extérieure de ladite deuxième portion (6B) est adjacente à une surface extérieure de ladite première portion (6A), la deuxième surface d'emboîtement (24) coopérant avec la première surface d'emboîtement (23) pour définir la position du deuxième sous-ensemble relativement au premier sous-ensemble.

2. Module de vitre fixe (4) selon la revendication précédente, **caractérisé en ce que** la deuxième surface d'emboîtement (24) est agencée sur une surface intérieure (28) de la deuxième portion (6B) du lécheur de porte (6), la surface intérieure de la deuxième portion étant agencée à l'envers de la surface extérieure de la deuxième portion, la première surface d'emboîtement (23) s'étendant sous la surface extérieure de la deuxième portion du lécheur de porte.

3. Module de vitre fixe (4) selon l'une des revendications précédentes, **caractérisé en ce que** la première surface d'emboîtement (23) comprend une gorge longitudinale (25), et **en ce que** la deuxième surface d'emboîtement (24) comprend une nervure longitudinale (27) coopérant avec ladite gorge longitudinale.

4. Module de vitre fixe (4) selon l'une des revendications précédentes, **caractérisé en ce que** le premier sous-ensemble (21) comprend au moins une lèvre d'étanchéité (31, 32, 33) s'étendant sans interruption sous la première portion (6A) du lécheur de porte et sous la deuxième portion (6B) du lécheur de porte.

5. Module de vitre fixe (4) selon l'une des revendications précédentes, **caractérisé en ce que** le premier sous-ensemble (21) comprend :
- une interface de fixation (41) s'étendant sensiblement dans un plan parallèle à la vitre (5), et **en ce que** l'embase (11) de rétroviseur extérieur est fixée à l'interface de fixation, et/ou
- un cadre (10) s'étendant autour de la vitre (5), et/ou
- des moyens de fixation (13) à un élément de véhicule, notamment à une porte (1) de véhicule.

6. Module de vitre fixe (4) selon l'une des revendications précédentes, **caractérisé en ce que** le premier sous-ensemble (21) est obtenu par surmoulage plastique de la vitre (5), et/ou **en ce que** le deuxième sous-ensemble (22) est obtenu par moulage plastique.

7. Procédé de fabrication d'un module de vitre fixe (4) selon l'une des revendications précédentes, **caractérisé en ce qu'**il comprend :
- une étape de fourniture du premier sous ensemble (21),
- une étape de fourniture du deuxième sous-ensemble (22),
- une étape d'assemblage du deuxième sous ensemble au premier sous-ensemble en emboîtant la deuxième surface d'emboîtement (24) dans la première surface d'emboîtement (23).

8. Procédé de fabrication selon la revendication précédente, **caractérisé en ce que** l'étape d'assemblage comprend :
- un déplacement en translation du deuxième sous-ensemble (22) jusqu'à engager la deuxième surface d'emboîtement (24) dans la première surface d'emboîtement (23), puis
- un déplacement en rotation du deuxième sous-ensemble pour plaquer le deuxième sous-ensemble contre le premier sous-ensemble, puis
- une fixation du deuxième sous-ensemble au premier sous-ensemble.

9. Porte (1) avant pour un véhicule automobile, **caractérisée en ce qu'**elle comprend un module de vitre fixe (4) selon l'une des revendications précédentes.

10. Porte (1) avant selon la revendication précédente, **caractérisée en ce qu'**elle comprend une troisième portion (6C) du lécheur de porte (6), une surface extérieure de ladite troisième portion (6C) étant adjacente à la surface extérieure de ladite deuxième portion (6B), la surface extérieure de ladite deuxième portion (6B) étant positionnée entre la surface extérieure de la première portion (6A) et la surface extérieure de la troisième portion (6C), la troisième portion comprenant une extrémité (29) s'étendant sous la deuxième portion.

## Patentansprüche

1. Feststehendes Fenstermodul (4) für ein Kraftfahrzeug, welches eine erste Unteranordnung (21) und eine an der ersten Unteranordnung befestigte zweite Unteranordnung (22) umfasst,
wobei die erste Unteranordnung (21) umfasst:
- eine feststehende Fensterscheibe (5),
- einen ersten Abschnitt (6A) einer Türfenster-Abstreifleiste (6) und
- eine erste Fügefläche (23),
wobei die zweite Unteranordnung (22) umfasst:
- einen Außenspiegelfuß (11),
**dadurch gekennzeichnet, dass** die zweite Unteranordnung außerdem umfasst:
- einen zweiten Abschnitt (6B) der Türfenster-Abstreifleiste (6) und
- eine zweite Fügefläche (24),
und dadurch, dass
eine Außenfläche des zweiten Abschnitts (6B) einer Außenfläche des ersten Abschnitts (6A) benachbart ist, wobei die zweite Fügefläche (24) mit der ersten Fügefläche (23) zusammenwirkt, um die Position der zweiten Unteranordnung relativ zur ersten Unteranordnung zu definieren.

2. Feststehendes Fenstermodul (4) nach dem vorhergehenden Anspruch, **dadurch gekennzeichnet, dass** die zweite Fügefläche (24) auf einer Innenfläche (28) des zweiten Abschnitts (6B) der Türfenster-Abstreifleiste (6) angeordnet ist, wobei die Innenfläche des zweiten Abschnitts auf der Kehrseite gegenüber der Außenfläche des zweiten Abschnitts angeordnet ist, wobei sich die erste Fügefläche (23) unter der Außenfläche des zweiten Abschnitts der Türfenster-Abstreifleiste erstreckt.

3. Feststehendes Fenstermodul (4) nach einem der vorhergehenden Ansprüche, **dadurch gekennzeichnet, dass** die erste Fügefläche (23) eine Längsrille (25) umfasst, und dadurch, dass die zweite Fügefläche (24) eine Längsrippe (27) umfasst, die mit der Längsrille zusammenwirkt.

4. Feststehendes Fenstermodul (4) nach einem der vorhergehenden Ansprüche, **dadurch gekennzeichnet, dass** die erste Unteranordnung (21) mindestens eine Dichtlippe (31 32, 33) umfasst, die sich ohne Unterbrechung unter dem ersten Abschnitt (6A) der Türfenster-Abstreifleiste und unter dem zweiten Abschnitt (6B) der Türfenster-Abstreifleiste erstreckt.

5. Feststehendes Fenstermodul (4) nach einem der vorhergehenden Ansprüche, **dadurch gekennzeichnet, dass** die erste Unteranordnung (21) umfasst:
- eine Befestigungsschnittstelle (41), die sich im Wesentlichen in einer zur Fensterscheibe (5) parallelen Ebene erstreckt, und dadurch, dass der Außenspiegelfuß (11) an der Befestigungsschnittstelle befestigt ist, und/oder
- einen Rahmen (10), der sich um die Fensterscheibe (5) herum erstreckt, und/oder
- Mittel zur Befestigung (13) an einem Fahrzeugelement, insbesondere an einer Fahrzeugtür (1).

6. Feststehendes Fenstermodul (4) nach einem der vorhergehenden Ansprüche, **dadurch gekennzeichnet, dass** die erste Unteranordnung (21) durch Kunststoffüberformung der Fensterscheibe (5) erhalten wird, und/oder dadurch, dass die zweite Unteranordnung (22) durch Kunststoffformung erhalten wird.

7. Verfahren zur Herstellung eines feststehenden Fenstermoduls (4) nach einem der vorhergehenden Ansprüche, **dadurch gekennzeichnet, dass** es umfasst:
- einen Schritt der Bereitstellung der ersten Unteranordnung (21),
- einen Schritt der Bereitstellung der zweiten Unteranordnung (22),
- einen Schritt des Anfügens der zweiten Unteranordnung an die erste Unteranordnung durch Einpassen der zweiten Fügefläche (24) in die erste Fügefläche (23) .

8. Verfahren zur Herstellung nach dem vorhergehenden Anspruch, **dadurch gekennzeichnet, dass** der Schritt des Anfügens umfasst:
- eine translatorische Bewegung der zweiten Unteranordnung (22), bis die zweite Fügefläche (24) in die erste Fügefläche (23) eingeführt wird, danach
- eine rotatorische Bewegung der zweiten Unteranordnung, um die zweite Unteranordnung an die erste Unteranordnung anzudrücken, danach
- eine Befestigung der zweiten Unteranordnung an der ersten Unteranordnung.

9. Vordertür (1) für ein Kraftfahrzeug, **dadurch gekennzeichnet, dass** sie ein feststehendes Fenstermodul (4) nach einem der vorhergehenden Ansprüche umfasst.

10. Vordertür (1) nach dem vorhergehenden Anspruch, **dadurch gekennzeichnet, dass** sie einen dritten Abschnitt (6C) der Türfenster-Abstreifleiste (6) umfasst, wobei eine Außenfläche des dritten Abschnitts (6C) der Außenfläche des zweiten Abschnitts (6B) benachbart ist, wobei die Außenfläche des zweiten Abschnitts (6B) zwischen der Außenfläche des ersten Abschnitts (6A) und der Außenfläche des dritten Abschnitts (6C) positioniert ist, wobei der dritte Abschnitt ein Ende (29) umfasst, das sich unter dem zweiten Abschnitt erstreckt.

## Claims

1. Fixed window module (4) for a motor vehicle, comprising a first subassembly (21) and a second subassembly (22) fixed to the first subassembly,
the first subassembly (21) comprising:
- a fixed window (5),
- a first portion (6A) of a door weatherstrip (6), and
- a first interlocking surface (23),
the second subassembly (22) comprising:
- a base (11) for an external rear-view mirror, **characterized in that** the second subassembly furthermore comprises:
- a second portion (6B) of the door weatherstrip (6), and
- a second interlocking surface (24),
and **in that**
an external surface of said second portion (6B) is adjacent to an external surface of said first portion (6A), the second interlocking surface (24) interacting with the first interlocking surface (23) so as to define the position of the second subassembly relative to the first subassembly.

2. Fixed window module (4) according to the preceding claim, **characterized in that** the second interlocking surface (24) is arranged on an internal surface (28) of the second portion (6B) of the door weatherstrip (6), the internal surface of the second portion being arranged on the opposite side to the external surface of the second portion, the first interlocking surface (23) extending under the external surface of the second portion of the door weatherstrip.

3. Fixed door module (4) according to either of the preceding claims, **characterized in that** the first interlocking surface (23) comprises a longitudinal groove (25), and **in that** the second interlocking surface (24) comprises a longitudinal rib (27) interacting with said longitudinal groove.

4. Fixed door module (4) according to one of the preceding claims, **characterized in that** the first subassembly (21) comprises at least one sealing lip (31, 32, 33) extending uninterrupted under the first portion (6A) of the door weatherstrip and under the second portion (6B) of the door weatherstrip.

5. Fixed window module (4) according to one of the preceding claims, **characterized in that** the first subassembly (21) comprises:
- a fixing interface (41) extending substantially in a plane parallel to the window (5), and **in that** the base (11) of the external rear-view mirror is fixed to the fixing interface, and/or
- a frame (10) extending around the window (5), and/or
- fixing means (13) for fixing to an element of the vehicle, in particular to a vehicle door (1).

6. Fixed window module (4) according to one of the preceding claims, **characterized in that** the first subassembly (21) is obtained by overmoulding the window (5) with plastic, and/or **in that** the second subassembly (22) is obtained by injection moulding of plastic.

7. Process for manufacturing a fixed window module (4) according to one of the preceding claims, **characterized in that** it comprises:
- a step of providing the first subassembly (21),
- a step of providing the second subassembly (22),
- a step of joining the second subassembly to the first subassembly by interlocking the second interlocking surface (24) in the first interlocking surface (23).

8. Manufacturing process according to the preceding claim, **characterized in that** the joining step comprises:
- moving the second subassembly (22) in translation until the second interlocking surface (24) engages in the first interlocking surface (23), then
- rotating the second subassembly so as to press the second subassembly against the first subassembly, and then
- fixing the second subassembly to the first subassembly.

9. Front door (1) for a motor vehicle, **characterized in that** it comprises a fixed window module (4) according to one of the preceding claims.

10. Front door (1) according to the preceding claim, **characterized in that** it comprises a third portion (6C) of the door weatherstrip (6), an external surface of said third portion (6C) being adjacent to the external surface of said second portion (6B), the external surface of said second portion (6B) being positioned between the external surface of the first portion (6A) and the external surface of the third portion (6C), the third portion comprising an end (29) extending under the second portion.
